# DEMANDE DE BREVET EUROPEEN

(11) **EP 1 498 835 A1**
(43) Date de publication de la demande: **19.01.2005**
(21) Numéro de dépôt: 04447146.4
(22) Date de dépôt: 21.06.2004
(51) Int. Cl.: G06F 17/60

(54) **Procédé d'identification et de traçabilité de produits alimentaires**

(30) Priorité: 20.06.2003 EP 03447159
(71) Demandeur: BFI, 5060 Falisolle (Sambreville) (BE)
(72) Inventeur: Brigode, Christian, 5060 Falisolle Sambreville (BE)
(74) Mandataire: Van Malderen, Joelle

(57) **Abrégé**

La présente invention se rapporte à un procédé d'identification d'animaux, de produits alimentaires et/ou cosmétiques (éventuellement issus de ces animaux) au sein d'une filière agroalimentaire ou cosmétique, comprenant les étapes suivantes :
- marquage par un code unique objet d'éléments choisis parmi le groupe constitué par lesdits animaux, lesdits produits alimentaires ou cosmétiques, des contenants et/ou des emballages desdits animaux, produits alimentaires ou cosmétiques sortant ou entrant dans une entreprise ;
- identification par un code unique entreprise des différentes entreprises (1) de ladite filière agroalimentaire ou cosmétique ;
- intégration au sein d'une base de données de traçabilité (2) pour chaque entreprise d'une filière, du code unique entreprise et du code unique objet desdits éléments sortant ou entrant de l'entreprise, ledit code unique objet attaché à chaque élément, étant transmis par des moyens de télécommunication à la base de données de traçabilité (2) par chaque entreprise par une étape de validation identifiant l'entreprise et lesdits éléments entrant dans l'entreprise et lors de l'expédition par une étape de clôture identifiant l'entreprise et lesdits éléments sortant de l'entreprise vers une autre entreprise de la même filière et identifiant les liens existant entre les produits entrant et les produits sortant de l'entreprise.

## Description

### Objet de l'invention

La présente invention est relative à un procédé d'identification et de traçabilité d'animaux et de produits alimentaires ou de produits cosmétiques d'origine végétale (céréales, légumes, fruits, jus de fruits, huiles végétales, épices, ...), d'origine animale (viande, abats d'animaux, rognons, coeur, foie, cervelle, boyaux, os, huiles ou graisses animales, oeufs, lait, fromages, ...) et éventuellement des éléments non alimentaires (tels que le cuir, la laine,...) d'origine micro-organique (levures, bactéries, champignons) ou d'origine minérale ou chimique (sels, oligo-éléments, colorants, conservateurs ...).

### Arrière-plan technologique et état de la technique à la base de l'invention

Suite à l'industrialisation des procédés d'élevage d'animaux et de la production des produits alimentaires, de nombreuses contaminations des animaux et des produits alimentaires ou cosmétiques ont été détectées trop tard et des lots de produits n'ont pu être bloqués à temps par les autorités.

Par conséquent, il existe un besoin urgent d'obtenir un procédé et des outils d'identification et de traçabilité efficaces des animaux et/ou, des produits alimentaires et cosmétiques par les entreprises et les autorités gouvernementales, sans modifier les procédés et outils de gestion actuellement utilisés par ces entreprises ou ces autorités.

Au sens du Règlement (CE) n° 178/2002, la traçabilité est définie comme « *la capacité de retracer, à travers toutes les étapes de la production, de la transformation et de la distribution, le cheminement d'une denrée alimentaire, d'un aliment pour animaux, d'un animal producteur de denrées alimentaires ou d'une substance destinée à être incorporée ou susceptible d'être incorporée dans une denrée alimentaire humaine ou un aliment pour animaux* ».

En d'autres termes, la traçabilité vu sous son aspect microéconomique (en entreprise) est la capacité de retracer, à travers toutes les étapes depuis la réception des matières premières jusqu'à l'expédition des produits finis chez les clients, le cheminement d'un produit alimentaire ou cosmétique.

Cependant, à ce jour, il n'existe pas de mise en oeuvre simple, peu coûteuse et surtout efficace de cette traçabilité, de manière à éviter toute contamination supplémentaire d'animaux, des produits alimentaires ou cosmétiques des consommateurs au sein d'une entreprise ou d'une filière.

La présente invention vise à fournir un procédé et des moyens d'identification répondant à ce but.

### Eléments caractéristiques de l'invention

La présente invention concerne un procédé d'identification d'animaux, de produits alimentaires et/ou de produits cosmétiques, éventuellement issus de ces animaux au sein d'une filière agroalimentaire ou cosmétique comprenant les étapes suivantes :
- marquage par un code unique objet des éléments constitués par lesdits animaux, lesdits produits alimentaires ou cosmétiques, des contenants et/ou des emballages desdits animaux, produits alimentaires ou cosmétiques, sortant ou entrant dans une entreprise ;
- identification par un code unique entreprise des différentes entreprises de ladite filière agroalimentaire ou cosmétique ;
- intégration au sein d'une base de données de traçabilité pour chaque entreprise de la filière du code unique entreprise et du code unique objet desdits éléments sortants ou entrants de l'entreprise, le code unique objet et code unique entreprise attaché à chaque élément étant transmis par chaque entreprise par des moyens de télécommunication à la base de données de traçabilité par une étape de validation identifiant l'entreprise et lesdits éléments entrant dans l'entreprise et lors de l'expédition par une étape de clôture identifiant l'entreprise et lesdits éléments sortant de l'entreprise vers une autre entreprise de la même filière et identifiant les liens existant entre les éléments entrant et les éléments sortant de l'entreprise. On entend par « identifier les liens existant entre les éléments entrant et sortant » fournir l'origine d'un élément sortant provenant du traitement d'un ou de plusieurs éléments entrants ou provenant du mélange de plusieurs éléments entrants identiques ou différents, ces éléments étant présentés sur le fichier texte transmis et conservé par la base de données lors de l'étape de clôture.

De préférence, les produits alimentaires ou cosmétiques sortant de l'entreprise sont des produits issus de la transformation d'animaux ou la résultante d'un mélange de plusieurs parties animales ou de plusieurs produits alimentaires ou cosmétiques entrant dans l'entreprise, chacun de ces produits sortants étant identifiés après transformation ou mélange par un code unique objet.

De préférence, la base de données est liée à une base de données de blocage identifiant les éléments à contrôler, à saisir ou à détruire au sein d'une filière.

Avantageusement, dans le procédé de l'invention, on identifie au niveau d'une base de données de blocage, un ou plusieurs éléments à contrôler, à saisir ou à détruire dans une filière et on attribue à ces éléments un code unique objet spécifique empêchant la validation et l'entrée au sein d'une entreprise le ou les élément(s) avant leur éventuel contrôle, saisie ou destruction.

Dans le procédé de l'invention, l'étape de marquage par un code unique objet des éléments s'effectue par un marquage par un barre-code, par une puce électronique ou par un hologramme.

Selon une forme d'exécution préférée de l'invention, les éléments sont des contenants (récipients, chariots, cages...) ou des emballages des animaux, produits alimentaires ou cosmétiques.

Dans le procédé de l'invention, les produits alimentaires ou cosmétiques peuvent être d'origine végétale, animale, minérale ou chimique ou peuvent comporter des micro-organismes.

De préférence, les produits d'origine végétale sont des céréales, des fruits, des légumes, des huiles végétales, des jus de fruits ou des épices. Les produits d'origine animale sont de préférence de la viande, des abats d'animaux (tels que du foie, du coeur, des rognons, de la cervelle, des boyaux, des os ...), du lait, du fromage ou des oeufs ou éventuellement des produits non alimentaires, tels que la peau (cuir) ou de la laine. Les produits d'origine minérale ou chimique sont de préférence du sel, des oligo-éléments, des colorants ou des conservateurs et les éléments d'origine micro-organique sont par exemple des levures, des bactéries (probiotiques) ou des champignons.

Le procédé d'identification de l'invention peut être éventuellement combiné à une ou plusieurs étapes de traçabilité d'éléments figurant dans une base de données de blocage, d'identifier l'origine de la contamination de ces éléments figurant dans la base de données de blocage, c'est-à-dire l'identification de l'entreprise comprenant le ou les éléments à l'origine de la contamination de la filière et de la totalité ou d'une partie des éléments contaminés repris dans la base de données de blocage.

Ce procédé d'identification peut être également combiné à un procédé de traçabilité permettant d'identifier à partir d'éléments figurant dans une base de données de blocage d'autres éléments susceptibles d'être contaminés par les éléments repris dans la base de données de blocage.

### Description d'une forme d'exécution préférée de l'invention

Le procédé d'identification et de traçabilité de l'invention est en mesure de :
- identifier tous les animaux ou toutes les produits alimentaires ou cosmétiques entrant ou sortant d'une entreprise ;
- localiser tant en externe qu'en interne ces animaux, produits alimentaires ou cosmétiques (y compris les produits alimentaires issus de ces animaux dans la préparation de ces produits alimentaires ou cosmétiques), ainsi que les mélanges de produits alimentaires ou cosmétiques et les liens existant entre ces produits (c'est-à-dire identifier quel produit sert à la préparation de quel autre produit (par transformation ou par mélange)) et :

- éventuellement retracer, c'est-à-dire faire l'historique des différents produits au sein de l'entreprise et identifier quels produits sont susceptibles de contaminer d'autres produits au sein de la même filière.

Cette traçabilité se fait par une identification de chaque produit, tant au niveau de l'entrée des matières premières entrant dans l'entreprise, qu'au niveau de l'expédition des produits finis (c'est-à-dire des produits transformés) sortant d'une entreprise donnée et éventuellement au sein de l'entreprise (lors de la transformation ou de la production de produits).

Cette identification permet avantageusement l'intégration également de certaines données de type H.A.C.C.P (Hazard Analysis Critical Control Point), en particulier les contrôles microbiologiques sur des échantillons de matières premières, les contrôles microbiologiques de l'efficacité des procédures de nettoyage et de désinfection, etc..

Cette traçabilité peut s'appliquer par un marquage des éléments incluant les produits vivants (animaux), les produits végétaux, les produits dérivés d'animaux (viande, oeufs), ainsi que les différents emballages ou containers comprenant ces dits produits (produits chimiques, minéraux, végétaux, animaux, produits micro-organiques, liquides ou solides, etc).

L'identification de ces différents éléments faite par des moyens connus en soi permettant l'utilisation d'un code unique objet (code barre, puce électronique, hologramme, marquage biologique,...) attaché sur chacun de ces éléments.

De même, des locaux d'entrée, de sortie et de production sont également identifiés au moyen d'un code unique lieu. C'est cette double identification des locaux et des éléments (produits et divers contenants (emballages ou récipients des produits alimentaires ou cosmétiques, des chariots transportant ces récipients, des cages comprenant les animaux, etc)) qui permet la mise en oeuvre d'une traçabilité géographique qui allie l'identification et la localisation des éléments au sein d'une entreprise ou d'un lieu de production ou de transformation des éléments dans l'entreprise. De plus, la simple lecture du code unique produit présent sur un emballage, sur une cage, sur un container ou sur un moyen de transport permet éventuellement d'identifier le contenant (produit vivant alimentaire ou cosmétique).

De plus, le marquage par un code unique lieu et un code' unique objet des différents locaux, récipients et moyens de transport et leur double intégration dans une base de données facilitent la gestion de qualité (respect de recettes de préparation des produits alimentaires, suivi des produits,...) et l'inventaire en production ou en fin de production.

Le système d'identification peut également être adapté pour collecter des données, telles que la prise de la date et de l'heure d'entrée d'une matière première ou de sortie (expédition) d'un produit fini ou le passage de différents éléments par différentes unités de production.

L'incorporation de ces différentes données (lecture par un lecteur connecté à la base de données d'un ordinateur) permet également de suivre, contrôler ou arrêter la progression des éléments dans la production (suivi des mélanges des produits, traitement des produits) et du stockage et facilite également la logistique et la gestion de qualité (contrôle des dates de péremption, suivi des étapes de production, contrôle de la productivité).

Le système d'identification de l'invention permet également de visualiser avantageusement les quantités de produits présents dans un container ou sur un moyen de transport et d'optimaliser la logistique et le transfert des éléments.

De plus, cette identification au sein d'une entreprise peut être avantageusement intégrée ou non dans une traçabilité d'une filière alimentaire intégrant à la fois des éléments destinés à l'alimentation des animaux, l'élevage desdits animaux et éventuellement l'obtention de produits dérivés de ces animaux (cuir, lait, oeufs, ...), le transport desdits éléments, le traitement des éléments (abattage, insémination, traitement thérapeutique des animaux), le traitement appliqué (thermique, chimique, biologique, ...) des éléments, la préparation de mélanges, les étapes de récupération, de traitement des déchets d'abattage et de production, la transformation de ces déchets d'abattage en produits alimentaires, le mélange de produits alimentaires, ....

Cette identification dans une filière peut être présente au sein de différentes filiales d'une même entreprise ou d'entreprises différentes appartenant à un ou plusieurs secteurs agro-alimentaires. Cette identification et le stockage de ces différentes données peuvent être avantageusement effectués ou contrôlés par des organismes nationaux ou supra-nationaux, en particulier dans le cas où ces produits ou animaux traversent les frontières, ou une organisation dédicacée à une filière particulière (auto-contrôle).

En effet, les autorités et les filières ont besoin d'informations centralisées pour gérer et localiser rapidement et correctement les accidents générant des éléments potentiellement dangereux pour les éleveurs ou les consommateurs.

Dans ce cas, toutes les entreprises(1) d'une filière (petites, moyennes ou grandes) doivent être inventoriées et identifiées par un code unique entreprise (numéro national ou numéro européen) dans une base de données de traçabilité (2).

Dans ce cas, tous les types de circuits de production et de distribution doivent être identifiés et localisés.

Pour assurer le dialogue entre les entreprises (1) de la filière et cette base de données (2), des outils informatiques, permettant une identification et une validation de l'identification de l'entreprise et des éléments entrant et sortant de l'entreprise, sont utilisés. Grâce à ces moyens d'identification dans une filière, l'autorité peut intervenir rapidement en cas de crise pour identifier les éléments dangereux à contrôler, saisir ou à détruire et prendre les mesures nécessaires pour assurer le blocage éventuel de ces produits au niveau d'une chaîne de production ou de distribution.

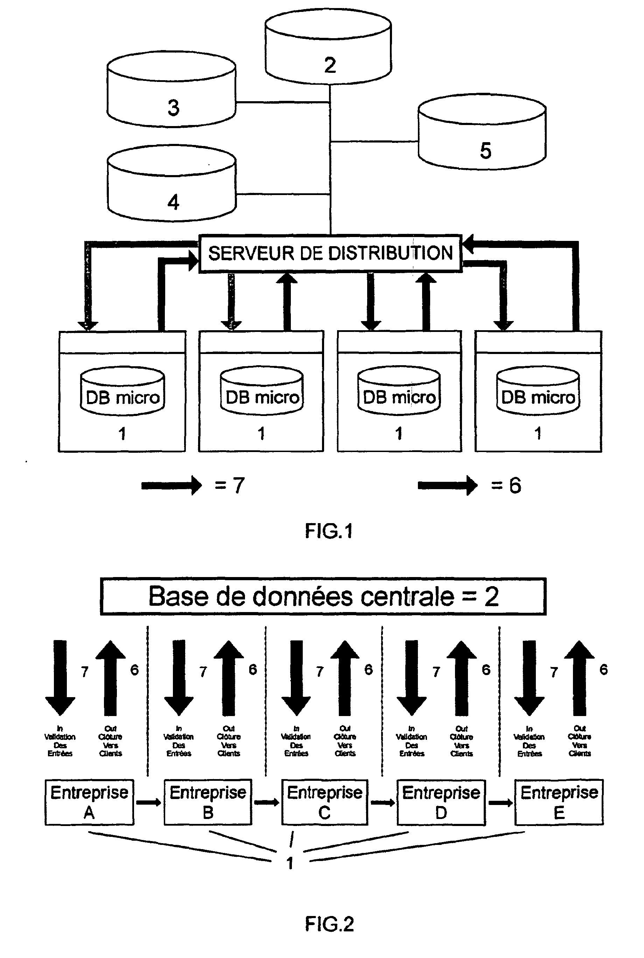

Des connections de cette base de données (2) avec des bases de données d'autres filières, des bases de données de systèmes de classification (3), de certification(4) et des laboratoires d'analyses(5) peuvent être également présents afin de qualifier ces produits (voir (figure. 1). Cette analyse qualitative peut être également utilisée pour assurer une identification correcte de produits répondant à certaines normes.

Pour assurer une efficacité optimale de l'identification et éventuellement la traçabilité au sein d'une filière, il est nécessaire d'effectuer pour chaque prestation d'entrée et de sortie des éléments dans une entreprise (1) ou une unité d'entreprise, une opération de validation et une opération de clôture pour chaque élément entrant et sortant.

L'étape ou opération de validation (6) est effectuée à la réception des matières premières ou avant l'utilisation de produits en stock, chaque entreprise (1) questionnant la base de données centrale (2), c'est-à-dire la base de données gouvernementale attachée à une filière, et éventuellement la base de données présente au sein de l'entreprise pour la traçabilité de ces propres éléments, pour permettre une validation (assurer une entrée autorisée de produits dans la chaîne de production ou de distribution).
Cette interrogation se fait par des moyens de télécommunication connus (par exemple, par transmission internet ou via un réseau de type VPN (virtual private network) permettant la transmission de fichiers textes. Ces fichiers textes sont présentés selon un format standard (ACII, XML, etc) reprenant des informations minimales, à savoir le code unique de l'entreprise et les codes uniques objets des éléments entrant dans l'entreprise. Ce fichier texte est transmis éventuellement via une interface vers la base de données qui collecte et mémorise ces fichiers et les compare aux fichiers présents dans la base de données. La réponse de l'interface ou de la base de données consiste en une identification des codes produits connus de la base de données qui renvoie à l'entreprise l'information sous forme d'un fichier texte reprenant les codes produits avec un code supplémentaire identifiant si le produit est inconnu ou si le produit est connu et bloqué (c'est-à-dire, si le produit n'est pas autorisé à entrer dans l'entreprise car repris dans une base de données de blocage et est donc un produit dangereux susceptible d'être contrôlé, saisi ou détruit et ne pouvant entrer dans l'entreprise).
De préférence, la validation est donc faite par exception, c'est-à-dire que le fichier texte reprend le nombre d'éléments identifiés et les éléments inconnus ou bloqués. Les éléments connus et acceptés ne sont pas identifiés comme tels.

Cette procédure permet avantageusement à l'entreprise de ne pas refaire un nouveau contrôle sur la totalité de ces produits acceptés mais simplement d'identifier parmi tous les produits entrants, des produits inconnus ou dangereux.

L'entreprise peut ensuite autoriser l'entrée de ces éléments en fonction des risques, c'est-à-dire l'entrée d'éléments connus est autorisée, l'entrée d'éléments inconnus est autorisée aux risques de l'entreprise ; l'entrée des éléments bloqués est interdite.

Ensuite, une étape ou opération de clôture (7) est effectuée lorsque la production (éléments à réutiliser ou à expédier) est finie ou en fin de journée, l'entreprise (1) envoyant vers la base de données (2) un deuxième fichier texte reprenant le code de l'entreprise et les codes uniques objet des éléments entrant dans l'entreprise, validés et utilisés, et les codes uniques objet attribués à des éléments sortant de l'entreprise (éventuellement issus de mélanges d'éléments entrants fabriqués à partir (traitement ou mélange) desdites matières premières (éléments entrants) (fig.2) et les liens existant entre les éléments entrants et les éléments sortants.

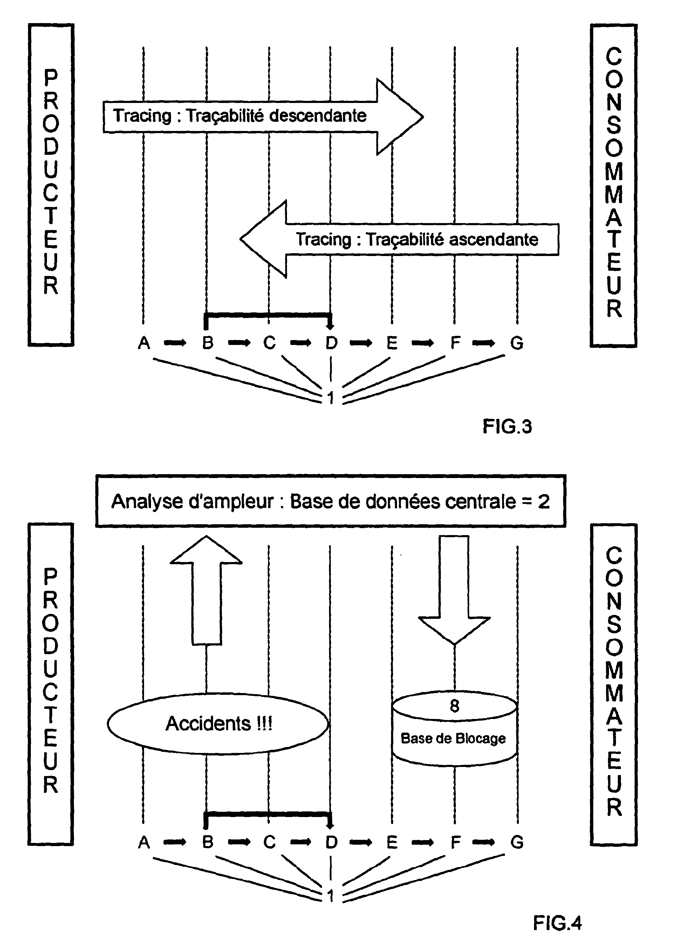

Le principe de cette opération de validation et de clôture est d'alimenter la base de données (2) (en informations et en liens entre entreprises (1) et entre éléments entrants et sortants) et de permettre aisément d'identifier ces éléments et ces entreprises et d'assurer une traçabilité ascendante et descendante de chacun des éléments (fig.3). Cette traçabilité ascendante ou « tracing » permet à toutes les étapes de retrouver l'historique et l'origine d'un animal, d'un produit alimentaire ou cosmétique donné sur base d'un ou de plusieurs critères (code produit, code entreprise, liens entre entreprises, liens entre produits, code qualité produit, code date de péremption, etc...).

La traçabilité descendante ou « tracking » consiste à retrouver la localisation industrielle ou commerciale à toutes les étapes des éléments contaminés à partir de ces critères donnés et d'incorporer ensuite ces éléments (à contrôler, à saisir ou à détruire) dans la base de données de blocage.

La traçabilité descendante sert notamment en cas de contrôle, de rappel, de saisie ou de blocage des éléments.

Par exemple en cas de crise alimentaire, un certain nombre d'éléments sont intégrés dans une base de données de blocage (8) qui par un lien avec la base de données (2) permet d'identifier directement quels éléments au sein d'une filière ne peuvent plus entrer dans une entreprise (via l'empêchement de la validation d'un élément entrant dans l'entreprise qui reçoit un fichier texte l'informant que ledit élément est bloqué). Cette procédure empêche que l'élément dangereux, (produits contaminés, périmés, volés) puisse être mis en contact avec d'autres produits ou acteurs (personnel, animaux, consommateurs) dans une autre entreprise ou dans une autre filière (fig.4).

Cette base de données de blocage (8) permet également d'identifier au sein de la base de données (2) de manière certaine des éléments incriminés dangereux ou suspects d'être dangereux par leur nature, leur localisation ou leur détention.

En outre, au niveau de la base de données (2), il est possible d'effectuer une analyse d'ampleur (liens entre produits, liens entre entreprises d'une filière) de manière à bloquer des éléments et à établir jusqu'à quel stade et à quel moment, différents acteurs (entreprise, distributeur, consommateur) ont pu être en contact avec ces éléments et assurer ainsi un niveau de protection sanitaire suffisant. Ainsi, lors de l'étape de la validation (6), c'est-à-dire avant l'entrée des éléments entrant dans une entreprise et avant l'utilisation de produits en stock, les éléments incriminés seront identifiés comme dangereux grâce à la réponse (fichier texte) reçue de la base de données (2). L'entreprise (1) effectuant cette validation (6) ne devra pas effectuer d'analyses complémentaires ; simplement, lorsque certains de ces éléments seront identifiés comme dangereux ou suspectés d'être dangereux, il faut les mettre à l'écart (ne pas les intégrer dans la production) et/ou suivre les recommandations d'utilisation (éventuellement transmis avec la réponse du fichier texte venant de la base de données) de ces éléments donnés par l'institution gouvernementale responsable de la base de données. (2).

Des systèmes similaires pourront être éventuellement intégrés au sein d'une seule unité de production en fonction des besoins de la direction ou de la gestion de qualité d'une entreprise. Les éléments mis à l'écart pourront être détruits ou saisis par des agents gouvernementaux compétents.

### Brève description des figures

La figure 1 représente l'organigramme d'une identification macro-économique d'une filière de production alimentaire.

La figure 2 représente les liens entre les différentes entreprises et la base de données centrale.

La figure 3 représente les différentes possibilités de traçabilité descendante et ascendante entre différentes entreprises au sein d'une même filière de production alimentaire.

La figure 4 représente les dispositifs de blocage d'éléments au sein d'une filière de production alimentaire.

La figure 5 représente un organigramme simplifié d'une traçabilité au sein d'une entreprise.

### Exemple de fichier de validation

| R1 5499950467103 VI 20030315-2 : identificatin GLN | |
|---|---|
| **Lot** | **Références** |
| | |
| R2 | 7145892 |
| R2 | 568478 |
| R2 | 147852 |
| R2 | 258963 |
| R2 | 456987 |
| R2 | 5842 |
| R2 | 781359 |
| R2 | 48652 |
| R2 | 782491 |
| R9 | 5499950467103 |
| | VI 20030315-2 9 |
| | |

### Exemple de fichier de réponse à une demande de validation

| R1 5499950467103 VO 20030315-2 : identification GLN | | |
|---|---|---|
| Lot | Références | Valeur |
| | | |
| R2 | 7145892 | 1 |
| R2 | 258963 | 2 |
| R2 | 5842 | 2 |
| R9 | 5499950467103 | VO 20030315-2 3 |
| | | |

### La validation est faite par exception.

Par conséquent, l'identification des lots portera uniquement sur des lots connus et bloqués ou des lots inconnus qui sont renvoyés à l'entreprise demandant une validation. Tous les autres lots sont considérés comme acceptés et leur identification en tant que lots entrant dans une entreprise sont conservés par la base de données pour permettre ensuite une corrélation avec les lots sortant de l'entreprise. Le statut renvoyé porte la valeur :
1 pour lot connu et bloqué
2 pour lot inconnu

Si tout est connu, l'utilisateur reçoit un fichier contenant un record R1 et un record R9 (nombre de record=0).

### Exemple d'identification d'éléments au sein d'une entreprise par intégration de codes produits et codes lieux

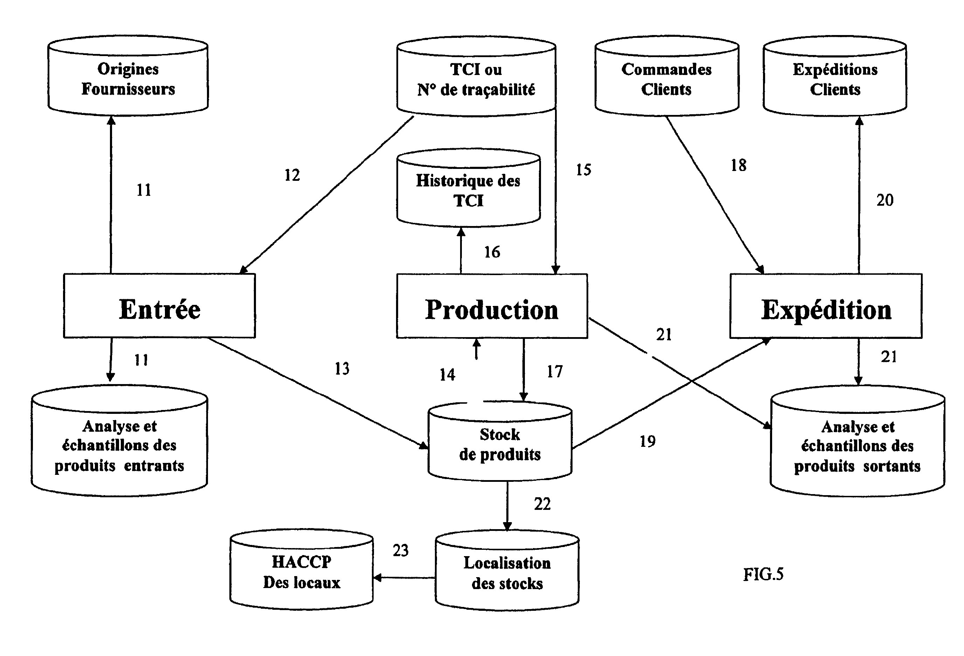

La figure 5 représente les étapes d'identification et de traçabilité d'éléments au sein de locaux d'entrée, de locaux de production et de locaux d'expédition d'une entreprise, chacun de ces locaux pouvant être identifié par un code unique lieu.

### Gestion des entrées

Mémorisation des informations fournisseurs relatives à la sécurité alimentaire (1)
Attribution d'un code de lot interne à l'entreprise-IDENTIFICATION (12)
Mise en stock des éléments entrants (13)

### Gestion de la production

Prélèvement de stock suivant les recettes des éléments à fabriquer (14)
Attribution d'un code de lot aux éléments fabriqués (15)
Mémorisation des liens entre les éléments prélevés et les éléments fabriqués (16)
Stockage des éléments fabriqués (17)

### Gestion de l'expédition

Préparation des commandes clients par lecture des étiquettes des lots des éléments livrés (18) PICKING
Mémorisation des sorties de stock (19)
Mémorisation des relations entre les éléments livrés et clients réceptionnés (20)
Mémorisation des données de sécurité alimentaire relatives aux éléments fabriqués et/ou livrés (21)

### Gestion des locaux de stockage

Mémorisation des lieux de stockage des éléments présents dans l'entreprise (22)
Mémorisation des données de sécurité alimentaire ou cosmétique relatives aux locaux de stockage (23)

## Revendications

1. Procédé d'identification d'animaux, de produits alimentaires et/ou cosmétiques (éventuellement issus de ces animaux) au sein d'une filière agroalimentaire ou cosmétique, comprenant les étapes suivantes :
- marquage par un code unique objet d'éléments choisis parmi le groupe constitué par lesdits animaux, lesdits produits alimentaires ou cosmétiques, des contenants et/ou des emballages desdits animaux, produits alimentaires ou cosmétiques sortant ou entrant dans une entreprise ;
- identification par un code unique entreprise des différentes entreprises (1) de ladite filière agroalimentaire ou cosmétique ;
- intégration au sein d'une base de données de traçabilité (2) pour chaque entreprise d'une filière, du code unique entreprise et du code unique objet desdits éléments sortant ou entrant de l'entreprise, ledit code unique objet attaché à chaque élément, étant transmis par des moyens de télécommunication à la base de données de traçabilité (2) par chaque entreprise par une étape de validation identifiant l'entreprise et lesdits éléments entrant dans l'entreprise et lors de l'expédition par une étape de clôture identifiant l'entreprise et lesdits éléments sortant de l'entreprise vers une autre entreprise de la même filière et identifiant les liens existant entre les produits entrant et les produits sortant de l'entreprise.

2. Procédé selon la revendication 1, **caractérisé en ce que** les produits alimentaires ou cosmétiques sortant de l'entreprise sont des produits issus de la transformation d'animaux ou sont la résultante d'un mélange de plusieurs parties animales ou plusieurs produits cosmétiques ou alimentaires entrant dans l'entreprise, chacun de ces produits sortant étant identifiable après transformation ou mélange par un code unique objet.

3. Procédé selon les revendications 1 ou 2, **caractérisé en ce que** la base de données (2) est liée à une base de données de blocage (8) identifiant les éléments à contrôler, à saisir ou à détruire au sein d'une filière.

4. Procédé selon la revendication 3, **caractérisé en ce que** l'on identifie au niveau d'une base de données de blocage (8) les éléments à contrôler, à saisir ou à détruire pour une filière alimentaire et **en ce que** l'on attribue à ces éléments un code unique objet spécifique empêchant la validation et l'entrée au sein d'une entreprise des éléments avant leur éventuel contrôle, saisie ou destruction.

5. Procédé selon la revendication 4, **caractérisé en ce que** les éléments entrant dans une entreprise après une étape de validation sont des produits dont le code objet est connu de la base de données et non repris par un code unique objet spécifique dans la base de données de blocage.

6. Procédé selon l'une quelconque des revendications 1 à 5, **caractérisé en ce** le marquage par code unique objet des éléments sortant ou entrant dans l'entreprise (1) est un marquage par un barre code, par une puce électronique ou par un hologramme.

7. Procédé selon l'une quelconque des revendications précédentes 1 à 6, **caractérisé en ce que** les éléments sont choisis parmi le groupe constitué par des emballages ou récipients de produits alimentaires ou cosmétiques, des chariots transportant ces récipients ou des cages d'animaux.

8. Procédé selon l'une quelconque des revendications précédentes 1 à 7, **caractérisé en ce que** les produits alimentaires ou cosmétiques sont d'origine végétale et choisis parmi le groupe constitué par les céréales, les fruits, les légumes, les huiles végétales, les jus de fruits et les épices.

9. Procédé selon l'une quelconque des revendications précédentes 1 à 7, **caractérisé en ce que** les produits alimentaires sont d'origine animale et sont choisis parmi le groupe constitué par la viande, les abats d'animaux, les huiles ou graisses animales, le lait, le fromage et les oeufs.

10. Procédé selon l'une quelconque des revendications précédentes, **caractérisé en ce que** les produits alimentaires ou cosmétiques sont d'origine minérale ou chimique et sont choisis parmi le groupe constitué par le sel, les oligo-éléments, les colorants et les conservateurs.
